# EUROPEAN PATENT SPECIFICATION

(11) **EP 2 409 881 B1**
(45) Date of publication and mention of the grant of the patent: **02.01.2013**
(21) Application number: 10006461.7
(22) Date of filing: 22.06.2010
(51) Int. Cl.: B60R 21/38, F15B 15/19, F15B 15/26

(54) **Pedestrian protection device for a vehicle**
Fußgängerschutzvorrichtung für ein Fahrzeug
Dispositif de protection des piétons pour véhicule

(43) Date of publication of application: 25.01.2012
(73) Proprietor: Autoliv Development AB, 447 83 Vårgårda (SE)
(72) Inventor: Carlstedt, Lars, 447 95 Vårgårda (SE); Kuntzsch, Stefan, 524 96 Ljung (SE); Ahlqvist, Anders, 447 35 Vårgårda (SE); Brygard, Stefan, 417 15 Göteborg (SE)
(74) Representative: Müller Verweyen

(56) References cited:
- EP-A1- 1 705 382
- EP-A2- 1 470 971
- EP-B- 1 536 991
- DE-A1- 3 730 808
- DE-A1-102004 037 060
- DE-A1-102005 024 350
- US-A1- 2004 128 998
- US-A1- 2009 084 620
- US-A1- 2009 217 814

## Description

The invention relates to a pedestrian protection device comprising the features of the preamble of claim 1.

There are increasing demands for a vehicle designer to take account pedestrian protection so that in case of an impact of a pedestrian to a vehicle the pedestrian has a reasonable chance of avoiding serious injury or death. Especially in frontal impact the pedestrian is thrown onto the hood of the vehicle. As the available space under the hood is very limited the hood itself is supported directly by parts of the engine or the vehicle structure and can be seen itself as a not deformable rigid structure. This rigid structure of the hood can be the reason for severe injuries when the pedestrian hits with the head onto the hood.

In order to reduce the risk of severe injuries it is known for example from the EP 1 536 991 B1 to provide a mechanism which lifts the rear edge of the hood in the event of an impact so that the energy of the pedestrian hitting onto the hood can be absorbed by deformation of the hood.

One problem of this design is that the rear edge of the hood is after the impact still in a released position which may cause problems for the driver driving to the garage. The released hood may reduce the field of view and may perform uncontrolled movements in general.

From DE 10 2005 024 350 A1 it is known a pedestrian protection device. A device according to the preamble of claim 1 is known from US 2009/008 4620 A1 (see figure 18).

It is an object of the invention to provide a generic pedestrian protection device with a lifting mechanism for the rear edge of the hood which allows the driver to drive in a secure manner to the garage without the risk of an uncontrolled lifting or movement of the hood, which should be easy to handle and to manufacture.

The object is solved by a pedestrian device according to the features of claim 1. Further preferred embodiments of the invention are contained in the subclaims, the figures and the referring description.

It is suggested that the lifting mechanism is provided with a piston cylinder unit comprising a piston rod which is guided through an opening of the cylinder wherein a gap is provided between the piston rod and the opening and that the opening is arranged in a first offset directed into the cylinder and the locking mechanism is designed as an element connected to the piston rod having first flexible barbs latching at the first offset when the hood is locked after the actuation of the lifting mechanism in a first position and that the element comprise second flexible barbs latching at the first offset before the actuation of the lifting mechanism when the hood is locked in a second position which is lower than the first position.

The advantage of the suggested solution is that the gap enables also a movement of the piston rod in side direction. A movement in side direction is reasonable when the movement of the hood provided by the lifting mechanism is not designed as a pure lifting movement but comprises also a side movement for example when the movement is designed as a pivoting movement. The suggested design of the locking mechanism and the suggested offset can be manufactured and assembled in an easy manner and the locking movement can be performed without using any tools or special knowledge. The second flexible barbs are used to secure the lifting mechanism in a predetermined position before the actuation.

It is further suggested that the locking mechanism is designed to lock the hood in a lower position compared to the position of the hood after the actuation of the lifting mechanism. The hood needs to be pushed downwards where the lifting mechanism is locked and the field of view for the driver is not limited by the hood.

Furthermore it is suggested that the first barbs comprise a higher strength than the second barbs. The purpose to the first barbs is to secure the hood in the locked position while the second barbs are securing the lifting mechanism in a predetermined position when the hood is secured additionally by extra secure elements. The first barbs are loaded in the locked status with a higher force and are therefore designed with a higher strength to withstand the higher force.

Furthermore it is suggested that at least one of the first and/or second barbs comprise a flat surface which corresponds to a flat section of the opening. The flat surface enables an assembly of the piston with the barbs in only one orientation in relation to the cylinder. Furthermore the resilient force which is acted by the barbs during the locking movement is more linear and controlled because of the flat surface.

Another preferred embodiment of the invention can be seen in that the cylinder comprises a second offset which is directed into the cylinder, and an energy absorbing device is provided which is arranged between the piston and the second offset. The energy absorbing device acts as a brake damping the lifting movement of the hood especially at the end.

Furthermore it is suggested that between the first offset and the second offset is provided a chamber in the cylinder providing a reception for the first and second barbs in the first position of the lifting mechanism.

An easy design for the energy absorbing device can be provided when the energy absorbing device is designed as a wave shaped deformation element or as an elastic rubber element.

In the following the invention is described more detailed with respect to two possible embodiments. The figures show in detail:
Fig.1: Hinge mechanism with one bracket for a connection to the vehicle structure and one bracket for a connection to a hood;
Fig.2: Lifting mechanism with a locking mechanism in four different positions;
Fig.3: An alternative locking mechanism in four different positions.

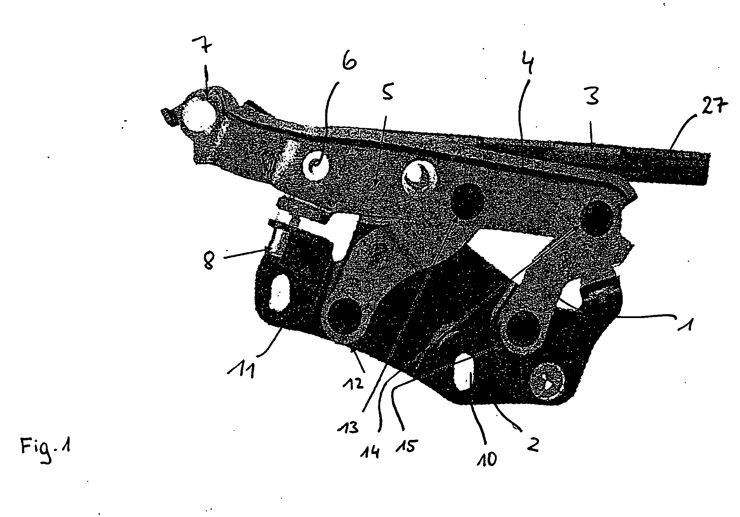

In figure 1 it is shown a conventional hinge mechanism to lift the rear edge of a hood 27 of a vehicle. The hinge mechanism comprises two brackets 2 and 3, wherein one bracket 2 is attachable to the vehicle structure and one bracket 3 is attached to the hood 27. The bracket 3 is connected pivotable via a rivet 7 to another bracket 4, which are connected via a shear pin 5 and can be seen in normal use as one part. At the bracket 2 is arranged an adjustment bolt 8 which defines the relative position of the bracket 4 to the bracket 2.

The hinge mechanism is further provided with a short lever 1 and a long lever 11 each connected with one end at the bracket 4 via rivets 13 and 14 and with one end at the bracket 2 via rivets 12 and 15.

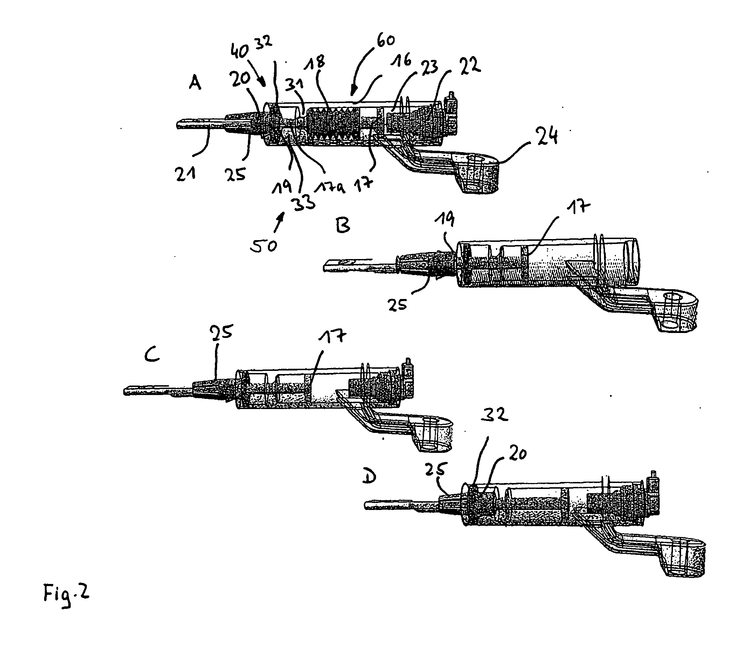

In figure 2 it is shown a lifting mechanism 50 in four different positions. The lifting mechanism 50 is designed as a piston cylinder unit 60 with two brackets 21 and 24 with one bracket 21 to be connected via a bolt for example in an aperture 6 at the bracket 4 and with one bracket 24 to be connected via a rivet in a long hole 10 at the bracket 2.

The piston cylinder unit 6.0 comprises a piston 17 with a piston rod 17a which is formed at the end to the bracket 21 connectable to the bracket 4. In one end of the cylinder 16 is arranged a gas generator 22, which is pressurising a pressure chamber 23 when activated. The pressure chamber 23 is closed by the piston 17, so that the piston 17 is driven to a movement lifting the hood 27 when the gasgenerator 22 is activated.

The cylinder 16 is further provided with two offsets 32 and 31, wherein the first offset 32 is designed as a ring pressed into the cylinder 16. Between the offset 31 and the piston 17 is arranged an energy absorbing device 18 realised by an elastic rubber element which damps the movement of the piston 17 at the end of the lifting movement of the hood 27. Instead of the elastic rubber element also a wave shaped metal sheet may be used.

At the piston rod 17a is fixed an element 25 with first barbs 20 and second barbs 19. The first and second barbs 20 and 19 are formed in a conical shape at the side faced to the piston 17. Furthermore the diameters of the barbs 19 and 20 are adapted to the diameter of an opening in the first offset 32. The first and second barbs 20 and 19 are flexible because of their shape and material and can therefore be compressed when they are inserted into the opening in the first offset 32. Furthermore the barbs 19 and 20 may have a flat surface which correspond a flat section of the opening in the first offset 32. The flat surface of the barbs 19 and 20 allows an assembly of the element 25 in only one or at least in a limited number of positions relative to the piston cylinder unit 60 and are easier to manufacture. The element 25 may be designed as a clip made of steel or plastic which comprise the barbs 19 and 20 as one-piece formed elements.

In the figure 2 are shown four different positions of the piston 17 in the cylinder 16 which are representative for different positions A,B,C and D of the hood 27 relative to the vehicle structure. In the position A the piston 17 is in the initial position before the gasgenerator 22 is actuated. The piston rod 17a is fixed by the element 25 with the second barbs 19 engaging into the opening in the first offset 32. The energy absorbing device 18 is elongated and not loaded.

When the gasgenerator 22 is actuated a gas pressure is created in the chamber 23 and the piston 17 is driven into the position B. The end 21 of the piston rod 17a is moved together with the attached not shown hood 27 in a lifted position. The element 25 is moved together with the piston rod 17a and the second barbs 19 are pushed through the opening of the first offset 32. This position B corresponds to the position of the hood 27 when the pedestrian hits onto the hood 27. During the movement of the piston 17 from the position A to the position B the energy absorbing device 18 was pressed together so that the movement was damped especially close before the piston 17 reached the position B. The energy absorbing device 18 is not shown in the positions B,C and D.

After the impact is finished the hood 27 can be moved backwards towards the vehicle structure before driving to the garage wherein the piston 17 with the piston rod 17a is moved into the cylinder 16 to the position C and finally to the position D. In the position D the piston 17 is secured by the first barbs 20 which are inserted into the opening in the first offset 32.

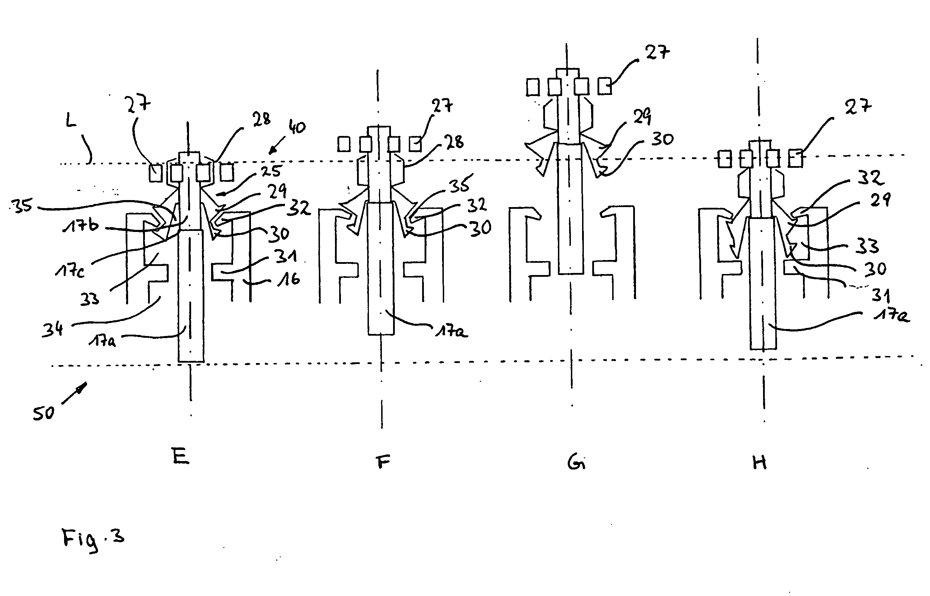

In the figure 3 it is shown a slightly different embodiment of the invention with the piston rod 17a in four different positions E,F,G and H. In the position E the lifting mechanism 50 is in a position where the hood 27 here shown as a part connected with the piston rod 17a is in the position before the actuation of the not shown gas generator 22. The piston rod 17a does not need to be connected directly with the hood 27 but may also be connected to an element which is fixed at the hood 27. The level of the position of the hood 27 is marked with the dashed line L. The locking mechanism 40 is designed as a flexible element 25 with first and second barbs 29 and 30 and a resilient section 28 which is fixed to a part of the hood 27. In the position E the element 25 engages with the second barbs 30 into an opening 35 of the offset 32. The piston rod 17a comprises at the end a section 17b with a smaller diameter than the piston rod 17a itself so that an offset 17c is provided which use is described later.

After the actuation of the not shown gas generator 22 the piston rod 17a is pushed out of the cylinder 16 in a first step until the hood 27 is released from the resilient section 28 and the hood 27 is decoupled from the locking mechanism 40 like shown in the position F. The first barbs 30 still engage into the opening 35 until the piston rod 17a abuts with the offset 17c at the inner diameter of the element 25.

When the piston rod 17a is pushed further into the position G the element 25 is pushed because of the abutting offset 17c with the second barbs 30 out of the cylinder 16. The position G corresponds to the lifted position of the hood 2 before the impact of the pedestrian. When the pedestrian hits onto the hood 27 in position G of the hood 27, the hood 27 may be moved downwards by pushing the piston 17 into the cylinder 16 against the pressure in the pressure chamber 23 or be plastically deformed using the created distance between the hood 27 and the vehicle structure. In the most of the cases the hood 27 will be deformed itself and additionally the piston 17 is pushed backwards into the cylinder 16. Both aspects enable an energy absorbing movement of the hood 27 which reduces the load to the hitting pedestrian and the risk of severe injuries. As the element 25 is pushed out of the cylinder 16 the pressurised gas in the chamber 23 may escape from the cylinder 16, and the hood 27 can be pushed down in the locked position with a reduced force.

After the impact is finished the hood 27 may be pushed downwards into the position H. The locking mechanism 40 locks the hood 27 in this position H by inserting the first and second barbs 29 and 30 into the opening 35 of the offset 32. The offset 32 and the offset 31 are limiting a chamber 33 which is used in the position H as a reception for the first and second barbs 29 and 30. The first barbs 29 are loaded in this position H with the total locking load especially as the shear pin 5 from figure 1 is broken and the resilient section 28 is released from the hood 27 or a part fixed to the hood 27. The first barbs 29 are designed therefore with a bigger strength than the second barbs 30 to withstand the higher forces.

It is clearly visible that the hood 27 is locked in position H in a lower position compared to the position G and especially close to the position E. The distance of the hood 27 in the position H from the position E is defined by the distance of the first and second barbs 29 and 30 in moving direction of the piston rod 17a. The field of view of the driver is therefore much less limited by the hood 27 than it was in the position G of the hood. This less limited field of view increases the safety for the driver driving to the garage. As the hood 27 must not be locked in position with the original locking device and only by latching the second barbs 30, the force to lock the hood in position H is relatively low and the latching movement from the position G to the position H can be easily performed by hand.

## Claims

1. Pedestrian protection device for a vehicle comprising a lifting mechanism (50) for lifting the rear edge of a hood (27) of the vehicle in case of an impact with a pedestrian, wherein the lifting mechanism (50) is provided with a locking mechanism (40) to lock the hood (27) after the actuation of the lifting mechanism (50), and the lifting mechanism (50) is provided with a piston cylinder unit (60) comprising a piston rod (17a) which is guided through an opening (35) of the cylinder (16) wherein a gap is provided between the piston rod (17a) and the opening (35), wherein the opening (35) is arranged in a first offset (32) directed into the cylinder (16) and the locking mechanism (40) is designed as an element (25) connected to the piston rod (17a) having first flexible barbs (20,29) latching at the first offset (32) when the hood (27) is locked after the actuation of the lifting mechanism (50) in a first position (H), **characterised in that** the element (25) comprises second flexible barbs (19,30) latching at the first offset (32) before the actuation of the lifting mechanism (50) when the hood (27) is locked in a second position (E) which is lower than the first position (H).

2. Pedestrian projection device according to claim 1, **characterised in that** the locking mechanism (40) is designed to lock the hood (27) in a lower position (H) compared to the position (G) of the hood (27) after the actuation of the lifting mechanism (50).

3. Pedestrian protection device according to claim 1, **characterised in that** the first barbs (20,29) comprise a higher strength than the second barbs (19,30).

4. Pedestrian protection device according to claim 1 or 3, **characterised in that** at least one of the first and/or second barbs (19,20,29,30) comprise a flat surface which corresponds to a flat section of the opening (35).

5. Pedestrian protection device according to one of the claims 1, 3 or 4, **characterised in that** the cylinder (16) comprise a second offset (31) which is directed into the cylinder (16), and an energy absorbing device (18) is provided which is arranged between the piston (17) and the second offset (31).

6. Pedestrian protection according to claim 5, **characterised in that** between the first offset (32) and the second offset (31) is provided a chamber (33) in the cylinder (16) providing a reception for the first and second barbs (19,20,29,30) in the first position (H) of the lifting mechanism (50).

7. Pedestrian protection device according to claim 5 or 6, **characterised in that** the energy absorbing device (18) is designed as a wave shaped deformation element.

8. Pedestrian protection device according to claim 5 or 6, **characterised in that** the energy absorbing device (18) is designed as an elastic rubber element.

## Patentansprüche

1. Fußgängerschutzvorrichtung für ein Fahrzeug mit einem Hubmechanismus (50) zum Anheben der hinteren Kante einer Motorhaube (27) des Fahrzeugs im Falle eines Zusammenstoßes mit einem Fußgänger, wobei der Hubmechanismus (50) mit einem Verriegelungsmechanismus (40) versehen ist, um die Motorhaube (27) nach dem Auslösen des Hubmechanismus (50) zu verriegeln, und der Hubmechanismus (50) mit einer Kolbenzylindereinheit (60) versehen ist, welche eine durch eine Öffnung (35) des Zylinders (16) geführte Kolbenstange (17a) umfasst, wobei zwischen der Kolbenstange (17a) und der Öffnung (35) ein Spalt vorgesehen ist, wobei die Öffnung (35) in einem ersten, in den Zylinder (16) hinein gerichteten Absatz (32) angeordnet ist und der Verriegelungsmechanismus (40) als ein mit der Kolbenstange (17a) verbundenes Element (25) mit ersten flexiblen Widerhaken (20, 29) ausgebildet ist, welche sich an dem ersten Absatz (32) einklinken, wenn die Motorhaube (27) nach dem Auslösen des Hubmechanismus (50) in einer ersten Position (H) verriegelt ist, **dadurch gekennzeichnet, dass** das Element (25) zweite flexible Widerhaken (19, 30) aufweist, die sich vor dem Auslösen des Hubmechanismus (50) an dem ersten Absatz (32) einklinken, wenn die Motorhaube (27) in einer zweiten Position (E), die niedriger ist als die erste Position (H), verriegelt ist.

2. Fußgängerschutzvorrichtung nach Anspruch 1, **dadurch gekennzeichnet, dass** der Verriegelungsmechanismus (40) dazu eingerichtet ist, die Motorhaube (27) in einer niedrigeren Position (H) verglichen mit der Position (G) der Motorhaube (27) nach dem Auslösen des Hubmechanismus (50) zu verriegeln.

3. Fußgängerschutzvorrichtung nach Anspruch 1, **dadurch gekennzeichnet, dass** die ersten Widerhaken (20, 29) eine höhere Festigkeit aufweisen als die zweiten Widerhaken (19, 30).

4. Fußgängerschutzvorrichtung nach Anspruch 1 oder 3, **dadurch gekennzeichnet, dass** mindestens einer der ersten und/oder zweiten Widerhaken (19, 20, 29, 30) eine flache Oberfläche aufweist, welche einem flachen Abschnitt der Öffnung (35) entspricht.

5. Fußgängerschutzvorrichtung nach einem der Ansprüche 1, 3 oder 4, **dadurch gekennzeichnet, dass** der Zylinder (16) einen zweiten, in den Zylinder (16) hinein gerichteten Absatz (31) aufweist, und ein energieabsorbierendes Element (18) vorgesehen ist, welches zwischen dem Kolben (17) und dem zweiten Absatz (31) angeordnet ist.

6. Fußgängerschutzvorrichtung nach Anspruch 5, **dadurch gekennzeichnet, dass** zwischen dem ersten Absatz (32) und dem zweiten Absatz (31) eine Kammer (33) in dem Zylinder (16) vorgesehen ist, welche eine Aufnahme für die ersten und zweiten Widerhaken (19, 20, 29, 30) in der ersten Position (H) des Hubmechanismus (50) bildet.

7. Fußgängerschutzvorrichtung nach Anspruch 5 oder 6, **dadurch gekennzeichnet, dass** das energieabsorbierende Element (18) als wellenförmiges Verformungsteil ausgebildet ist.

8. Fußgängerschutzvorrichtung nach Anspruch 5 oder 6, **dadurch gekennzeichnet, dass** das energieabsorbierende Element (18) als elastisches Gummiteil ausgebildet ist.

## Revendications

1. Dispositif de protection des piétons pour un véhicule comprenant un mécanisme de levage (50) destiné à lever le bord arrière d'un capot (27) du véhicule en cas d'impact avec un piéton, dans lequel le mécanisme de levage (50) est pourvu d'un mécanisme de verrouillage (40) pour verrouiller le capot (27) après le déclenchement du mécanisme de levage (50), et le mécanisme de levage (50) est pourvu d'une unité cylindre-piston (60) comprenant une tige de piston (17a) qui est guidée à travers une ouverture (35) du cylindre (16), dans lequel un interstice est prévu entre la tige de piston (17a) et l'ouverture (35), dans lequel l'ouverture (35) est disposée dans un premier épaulement (32) dirigé dans le cylindre (16) et le mécanisme de verrouillage (40) est conçu sous la forme d'un élément (25) relié à la tige de piston (17a) ayant des premiers barbillons flexibles (20, 29) venant en prise au niveau du premier épaulement (32) lorsque le capot (27) est verrouillé après le déclenchement du mécanisme de levage (50) dans une première position (H), **caractérisé par le fait que** l'élément (25) comprend des seconds barbillons flexibles (19, 30) venant en prise au niveau du premier épaulement (32) avant le déclenchement du mécanisme de levage (50) quand le capot (27) est verrouillé dans une seconde position (E) qui est inférieure à la première position (H).

2. Dispositif de protection des piétons selon la revendication 1, **caractérisé par le fait que** le mécanisme de verrouillage (40) est conçu pour verrouiller le capot (27) dans une position (H) inférieure par rapport à la position (G) du capot (27) après le déclenchement du mécanisme de levage (50).

3. Dispositif de protection des piétons selon la revendication 1, **caractérisé par le fait que** les premiers barbillons (20, 29) comprennent une résistance supérieure aux seconds barbillons (19, 30).

4. Dispositif de protection des piétons selon la revendication 1 ou 3, **caractérisé par le fait qu'**au moins un des premiers et/ou seconds barbillons (19, 20, 29, 30) comprend une surface plate qui correspond à une section plate de l'ouverture (35).

5. Dispositif de protection des piétons selon l'une quelconque des revendications 1, 3 ou 4, **caractérisé par le fait que** le cylindre (16) comprend un second épaulement (31) qui est dirigé dans le cylindre (16), et un dispositif d'absorption d'énergie (18) est prévu qui est disposé entre le piston (17) et le second épaulement (31).

6. Dispositif de protection des piétons selon la revendication 5, **caractérisé par le fait que**, entre le premier épaulement (32) et le second épaulement (31), une chambre (33) est prévue dans le cylindre (16) fournissant un réception pour les premiers et seconds barbillons (19, 20, 29, 30) dans la première position (H) du mécanisme de levage (50).

7. Dispositif de protection des piétons selon la revendication 5 ou 6, **caractérisé par le fait que** le dispositif d'absorption d'énergie (18) est conçu sous la forme d'un élément de déformation en forme de vague.

8. Dispositif de protection des piétons selon la revendication 5 ou 6, **caractérisé par le fait que** le dispositif d'absorption d'énergie (18) est conçu sous la forme d'un élément en caoutchouc élastique.
